# EUROPÄISCHE PATENTSCHRIFT

(11) **EP 2 845 778 B1**
(45) Veröffentlichungstag und Bekanntmachung des Hinweises auf die Patenterteilung: **15.01.2020**
(21) Anmeldenummer: 14182359.1
(22) Anmeldetag: 27.08.2014
(51) Int. Cl.: B60W 10/02, B60W 10/06, B60W 30/186, F16D 48/06

(54) **Verfahren und Vorrichtung zur Steuerung eines Antriebsstranges eines Kraftfahrzeuges**
Method and device for controlling a drive train of a motor vehicle
Procédé et dispositif de commande d'une chaîne cinématique de véhicule automobile

(30) Priorität: 30.08.2013 DE 102013217304
(43) Veröffentlichungstag der Anmeldung: 11.03.2015
(73) Patentinhaber: Schaeffler Technologies AG & Co. KG, 91074 Herzogenaurach (DE)
(72) Erfinder: Schneider, Michael, 76534 Baden-Baden (DE)

(56) Entgegenhaltungen:
- WO-A1-03/019029
- DE-A1-102004 023 581
- DE-A1-102011 107 232
- DE-A1-102012 202 551
- FR-A1- 2 863 026
- FR-A1- 2 970 927
- GB-A- 1 210 860

## Beschreibung

Die Erfindung betrifft ein Verfahren mit den Merkmalen gemäß dem Oberbegriff des Anspruchs 1, sowie eine Vorrichtung mit den Merkmalen gemäß dem Oberbegriff des Anspruchs 3 gelöst.

Verfahren zur Steuerung automatisierter Antriebsstränge sind aus Serienanwendungen hinreichend bekannt. Hierbei wird eine, vom Fahrer erwünschte und mittels entsprechender Bedienungselemente, wie einem Schalt- oder Wählhebel und einem Kupplungspedal, angezeigte Fahrsituation einem Steuergerät mitgeteilt, welches die Steuerung mittels eines Fahrprogramms ausführt.

Die FR 2 970 927 A sowie die DE 10 2004 023 581 A offenbaren Kupplungsschutzfunktionen welche vorsehen, das Motordrehmoment zu reduzieren, wenn die Kupplung eine zu hohe Temperatur erreicht oder eine zu erwartende Kupplungstemperatur einen
Schwellenwert überschreitet. Die WO 03/019029 A offenbart Verfahren zur Reibwertadaption einer Kupplung, wonach der Kupplungsreibwert, mit dem die Kupplungs- bzw. die Getriebesteuersoftware ihre Berechnungen durchführt, jeweils an den aktuellen realen physikalischen Reibwert der Kupplung angepasst wird. Die Dokumente DE 10 2011 107 232 A, FR 2 63 026 A sowie GB 1 210 860 A offenbaren Reibwert-gegen-Temperatur-Kennlinien, wonach der Reibwert des in den jeweiligen Dokumenten verwendeten Kupplungsreibbelags bei höheren Temperaturen ansteigt.

Aus der DE 10 2012 202 551 A1 ist ein Verfahren zur Steuerung eines Antriebsstranges bekannt, bei welchem die Kurbelwelle einer Brennkraftmaschine mit einer Getriebeeingangswelle eines automatisierten Getriebes über eine automatisierte Reibkupplung verbunden ist. Dabei werden abhängig von einer, von einem Fahrer erwünschten Fahrsituation durch ein Fahrprogramm der Brennkraftmaschine ein Gangwechsel in dem Getriebe und die zumindest eine Reibungskupplung gesteuert.

Es sind darüber hinaus Fahrzeuge bekannt, welche in einem Steuergerät ein Temperaturmodell zur Vorhersage der Temperatur eines Kupplungssystems aufweisen. Darüber hinaus verfügt das Steuergerät über Daten, die das Verhalten des Reibwertes von organischen Belägen der Reibkupplung in Abhängigkeit von der Temperatur beinhalten.

Je nach Reibbelag der Reibkupplung sind die Reibwerte bei niedrigen Temperaturen deutlich geringer als bei normalen Betriebstemperaturen der Reibkupplung. Dies hat den Nachteil, dass in gewissen Zuständen ein maximales Motormoment, welches von der Brennkraftmaschine über die Kurbelwelle an die Getriebeeingangswelle ausgegeben werden soll, nicht übertragen werden kann, da es zum Durchrutschen der Reibkupplung kommt.

Der Erfindung liegt somit die Aufgabe zugrunde, ein Verfahren anzugeben, bei welchen ein Durchrutschen der Reibkupplung zuverlässig verhindert wird.

Diese Aufgabe wird durch ein Verfahren mit den Merkmalen gemäß Anspruch 1 sowie durch eine Vorrichtung mit den Merkmalen gemäß Anspruch 3 gelöst.

Erfindungsgemäß ist die Aufgabe also dadurch gelöst, dass bei einer Änderung einer Temperatur der Reibkupplung das Motormoment der Brennkraftmaschine geändert wird. Durch die Einstellung einer solchen Abhängigkeit wird ein Durchrutschen der Reibkupplung zuverlässig verhindert, indem das abrufbare Motormoment an die in der Kupplung detektierte Kupplungstemperatur angepasst wird. Damit wird sichergestellt, dass das Motormoment bei jeder Temperatur der Reibkupplung zuverlässig übertragen wird.

Vorteilhafterweise wird das maximal abrufbare Motormoment der Brennkraftmaschine bei niedrigen Temperaturen der Reibkupplung abgesenkt. Da der Reibwert des Reibbelages der Reibungskupplung bei niedrigen Temperaturen erfahrungsgemäß geringer wird, wird ein geringeres Motormoment über die zwischen Kurbelwelle und Getriebeeingangswelle angeordnete Reibkupplung zuverlässig übertragen, da das maximal abrufbare Motormoment minimiert wird und so ein Durchrutschen der Kupplung verhindert wird.

Erfindungsgemäß wird die aktuelle Temperatur der Reibkupplung aus einem Temperaturmodell bestimmt, welcher aus einem, einem Belag der Kupplung zugeordneten Reibwertkennfeld ein Reibwert zugeordnet wird, wobei der Reibwert jeweils einem maximalen Motormoment entspricht. Aufgrund der Verwendung eines mathematischen Temperaturmodelles zur Bestimmung der aktuellen Temperatur der Reibkupplung kann auf einen Temperatursensor in der Kupplung verzichtet werden, wodurch sich der konstruktive Aufbau der Reibkupplung vereinfacht und somit die Herstellungskosten reduziert werden. Durch die Kombination des bekannten Reibwertkennfeldes der im Kraftfahrzeug verbauten Reibkupplung mit dem Temperaturmodell für die Reibkupplung wird eine Beeinflussung der Motorsteuerung im Bereich niedriger Kupplungstemperaturen erzielt, weshalb das maximal abrufbare Motormoment vorsorglich um ein gewisses Niveau abgesenkt wird. Über das Reibkennfeld wird somit eine Beziehung zwischen Temperatur der Reibkupplung und Motormoment der Brennkraftmaschine hergestellt.

Erfindungsgemäß wird das, dem Reibwert zugeordnete maximale Motormoment mit dem aktuellen Motormoment der Brennkraftmaschine verglichen und bei Überschreitung des dem Reibwert zugeordneten maximalen Motormomentes durch das aktuelle Motormoment, das aktuelle Motormoment auf das dem Reibwert zugeordnete maximale Motormoment begrenzt. Somit wird einem Durchrutschen der Reibkupplung vorgebeugt.

Die Erfindung betrifft auch eine Vorrichtung zur Steuerung eines Antriebsstranges eines Kraftfahrzeuges, welche ein, mit Antriebsrädern des Kraftfahrzeuges verbundenes Getriebe aufweist und eine Getriebeeingangswelle mit einer Kurbelwelle einer Brennkraftmaschine über eine automatisierte Reibkupplung zum Antrieb des Antriebsstranges verbunden ist. Bei einer Vorrichtung, bei welcher ein Durchrutschen der Reibkupplung bei jeder Temperatur vorsorglich unterbunden wird, sind Mittel vorhanden, welche bei einer Änderung einer Temperatur der Reibkupplung das Motormoment der Brennkraftmaschine ändern. Damit wird sichergestellt, dass bei einer vorgegebenen Temperatur der Reibkupplung ein unzulässig hohes maximales Motormoment der Brennkraftmaschine unterbunden wird, um ein Durchrutschen der Reibkupplung zu unterbinden.

Erfindungsgemäß umfassen die Mittel einen Mikroprozessor, welcher in einer Weiterbildung der Erfindung das maximal abrufbare Motormoment der Brennkraftmaschine bei niedrigen Temperaturen der Reibkupplung absenkt. Mittels des Mikroprozessors lässt sich die Abhängigkeit zwischen maximal abrufbarem Motormoment der Brennkraftmaschine und der Temperatur der Reibkupplung einfach softwaremäßig verarbeiten, ohne dass zusätzliche konstruktive Anforderungen an das Kupplungssystem zu stellen sind.

Erfindungsgemäß bestimmt der Mikroprozessor eine aktuelle Temperatur der Kupplung aus einem, in einem Speicher abgespeicherten Temperaturmodell und ordnet diesem aus einem, einem Belag der Kupplung zugeordneten Reibwertkennfeld einen Reibwert zu, wobei jeder Reibwert je einem maximalen Motormoment entspricht. Mittels der Kombination der an sich bekannten Reibwertfelder mit dem Temperaturmodell der Reibkupplung ist eine Beeinflussung der Motorsteuerung, vorzugsweise im Bereich niedriger Kupplungstemperaturen jederzeit möglich. Das maximal abrufbare Motormoment wird somit auf ein gewisses Niveau abgesenkt und einem Durchrutschen der Reibkupplung vorgebeugt.

Erfindungsgemäß vergleicht der Mikroprozessor das dem Reibwert zugeordnete maximale Motormoment mit dem aktuellen Motormoment der Brennkraftmaschine und begrenzt bei Überschreitung des dem Reibwert zugeordneten maximalen Motormomentes durch das aktuelle Motormoment das aktuelle Motormoment auf das dem Reibwert zugeordnete maximale Motormoment. Somit wird bei jeder Temperatur der Reibkupplung an der Brennkraftmaschine ein maximal zulässiges Motormoment eingestellt, wodurch ein Durchrutschen der Reibkupplung zuverlässig verhindert wird.

Die Erfindung lässt zahlreiche Ausführungsformen zu. Eine davon soll anhand der in der Zeichnung dargestellten Figur näher erläutert werden.

Es zeigt:

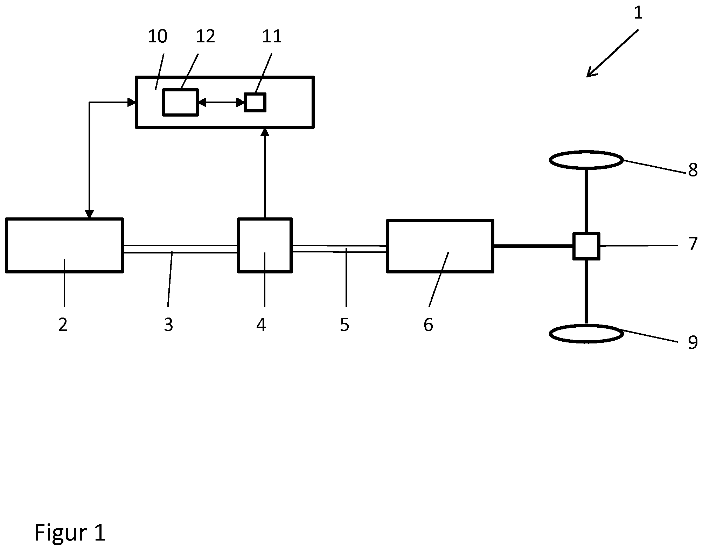

- Figur 1:: eine Prinzipdarstellung eines gesteuerten Antriebsstranges mit einem Schaltgetriebe.

Figur 1 zeigt eine Prinzipdarstellung eines Antriebsstranges in einem Kraftfahrzeug. Der Antriebsstrang 1 weist eine Brennkraftmaschine 2 auf, welche eine Kurbelwelle 3 antreibt. Über eine Reibkupplung 4 wird die Kurbelwelle 3 mit einer Getriebeeingangswelle 5 verbunden, wobei die Getriebeeingangswelle 5 mit einem Schaltgetriebe 6 gekoppelt ist. Das Schaltgetriebe 6 steht mit einem Differential 7 in einer Wirkverbindung, welches das Antriebsmoment auf die angetriebenen Räder 8, 9 des Kraftfahrzeuges überträgt. Darüber hinaus ist ein Steuergerät 10 vorhanden, welches sowohl mit dem Schaltgetriebe 6 als auch der Brennkraftmaschine 2 verbunden ist. In einem Speicher 11 des Steuergerätes 10 sind ein Temperaturmodell und ein Reibkennfeld abgespeichert. Das Reibkennfeld wird aufgrund des in der Reibkupplung 4 verbauten Reibbelages ausgewählt und charakterisiert das unterschiedliche Reibverhalten bei verschiedenen Temperaturen der Reibkupplung 4. Das Temperaturmodell weist Eingangsgrößen wie das Drehmoment oder die Motordrehzahl auf, aus welchen durch einen Mikroprozessor 12 des Steuergerätes 10 eine Reibenergie errechnet wird. Unter Berücksichtigung der thermischen Masse des Kupplungssystems aus der Reibenergie auf die Temperatur der Reibkupplung 4 geschlossen.

Um nun ein Durchrutschen der Reibkupplung 4 bei niedrigen Temperaturen der Reibkupplung 4 zu unterbinden, wird zunächst über das Temperaturmodell von dem Mikroprozessor 12 die Isttemperatur der Reibkupplung 4 bestimmt. Anhand dieser Isttemperatur wird aus dem Reibwertkennfeld ein dieser Temperatur entsprechender Reibwert des Reibbelages der Reibkupplung 4 ausgelesen. Ebenfalls im Reibwertkennfeld ist jedem Reibwert ein maximales Motormoment zugeordnet. Dieses maximale Motormoment wird durch den Mikroprozessor 12 ausgelesen und mit dem aktuellen Motormoment der Brennkraftmaschine 2 verglichen. Ergibt dieser Vergleich, dass das aktuelle Motormoment das dem Reibwert und somit der aktuellen Temperatur entsprechenden maximalen Motormoment übersteigt, so wird das aktuelle Motormoment auf das dem Reibwert entsprechende maximale Motormoment begrenzt.

Somit wird nicht nur ein Durchrutschen der Reibkupplung 4 bei niedrigen Temperaturen der Reibkupplung 4 verhindert, sondern mit Hilfe dieser Maßnahme sind auch Reibbeläge in der Reibkupplung 4 einsetzbar, die bisher den Nachteil hatten, dass die Reibwerte bei niedrigen Temperaturen zu gering waren und daher nicht in der Reibkupplung 4 bei niedrigen Temperaturen verbaut wurden.

### Bezugszeichenliste

- 1: Antriebsstrang
- 2: Brennkraftmaschine
- 3: Kurbelwelle
- 4: Reibkupplung
- 5: Getriebeeingangswelle
- 6: Schaltgetriebe
- 7: Differential
- 8: Angetriebenes Rad
- 9: Angetriebenes Rad
- 10: Steuergerät
- 11: Speicher
- 12: Mikroprozessor

## Patentansprüche

1. Verfahren zur Steuerung eines Antriebsstranges eines Kraftfahrzeuges, mit einer, eine Kurbelwelle (3) mit einem vorgegebenen Motormoment antreibenden Brennkraftmaschine (2), wobei die Kurbelwelle (3) mit einer Getriebeeingangswelle (5) eines Getriebes (6) über eine Reibkupplung (4) zum Antrieb des Antriebsstranges (1) verbunden wird, wobei bei einer Änderung einer Temperatur der Reibkupplung (4) das Motormoment der Brennkraftmaschine (2) geändert wird, **dadurch gekennzeichnet, dass** die aktuelle Temperatur der Reibkupplung (4) aus einem Temperaturmodell bestimmt wird, welcher aus einem, einem Belag der Reibkupplung (4) zugeordneten Reibwertkennfeld einen Reibwert zugeordnet wird, wobei der Reibwert jeweils einem maximalen Motormoment entspricht, wobei das dem Reibwert zugeordnete maximale Motormoment mit dem aktuellen Motormoment der Brennkraftmaschine (2) verglichen wird und bei Überschreitung des dem Reibwert zugeordneten maximalen Motormomentes durch das aktuelle Motormoment das aktuelle Motormoment auf das dem Reibwert zugeordnete maximale Motormoment begrenzt wird.

2. Verfahren nach Anspruch 1, **dadurch gekennzeichnet, dass** das maximal abrufbare Motormoment der Brennkraftmaschine (2) bei niedrigen Temperaturen der Reibkupplung (4) abgesenkt wird.

3. Vorrichtung zur Steuerung eines Antriebsstranges eines Kraftfahrzeuges, welche ein mit Antriebsrädern (8, 9) des Kraftfahrzeuges verbundenes Getriebe (6) aufweist und eine Getriebeeingangswelle (5) mit einer Kurbelwelle (3) einer Brennkraftmaschine (2) über eine Reibkupplung (4) zum Antrieb des Antriebsstranges (1) verbunden ist, wobei Mittel (10, 11, 12) vorhanden sind, welche bei einer Änderung einer Temperatur der Reibkupplung (4) das Motormoment der Brennkraftmaschine (2) ändern, wobei die Mittel (10, 11, 12) einen Mikroprozessor (12) umfassen, **dadurch gekennzeichnet, dass** der Mikroprozessor (12) eine aktuelle Temperatur der Reibkupplung (4) aus einem, in einem Speicher (11) abgespeicherten Temperaturmodell bestimmt und diesem aus einem, einem Belag der Reibkupplung (4) zugeordneten Reibwertkennfeld einen Reibwert zuordnet, welcher je einem maximalen Motormoment entspricht, wobei der Mikroprozessor (12) das dem Reibwert zugeordnete maximale Motorelement mit dem aktuellen Motormoment der Brennkraftmaschine (2) vergleicht und bei Überschreibung das dem Reibwert zugeordneten maximalen Motormoments durch das aktuelle Motormoment, das aktuelle Motormoment auf das dem Reibwert zugeordnete maximale Motormoment begrenzt.

4. Vorrichtung nach Anspruch 3, **dadurch gekennzeichnet, dass** das maximal abrufbare Motormoment der Brennkraftmaschine (2) bei niedrigen Temperaturen der Reibkupplung (4) absenkt.

## Claims

1. Method for controlling a drive train of a motor vehicle, having an internal combustion engine (2) which drives a crankshaft (3) with a predefined engine torque, the crankshaft (3) being connected to a transmission input shaft (5) of a transmission (6) via a friction clutch (4) in order to drive the drive train (1), the engine torque of the internal combustion engine (2) being changed in the case of a change in a temperature of the friction clutch (4), **characterized in that** the current temperature of the friction clutch (4) is determined from a temperature model which is assigned a friction coefficient from a friction coefficient characteristic diagram which is assigned to a lining of the friction clutch (4), the friction coefficient corresponding in each case to a maximum engine torque, the maximum engine torque which is assigned to the friction coefficient being compared with the current engine torque of the internal combustion engine (2) and, if the maximum engine torque which is assigned to the friction coefficient is exceeded by the current engine torque, the current engine torque being limited to the maximum engine torque which is assigned to the friction coefficient.

2. Method according to Claim 1, **characterized in that** the maximum available engine torque of the internal combustion engine (2) is lowered at low temperatures of the friction clutch (4).

3. Apparatus for controlling a drive train of a motor vehicle, which apparatus has a transmission (6) which is connected to the drive wheels (8, 9) of the motor vehicle, and a transmission input shaft (5) is connected to a crankshaft (3) of an internal combustion engine (2) via a friction clutch (4) in order to drive the drive train (1), there being means (10, 11, 12) which, in the case of a change in a temperature of the friction clutch (4), change the engine torque of the internal combustion engine (2), the means (10, 11, 12) comprising a microprocessor (12), **characterized in that** the microprocessor (12) determines a current temperature of the friction clutch (4) from a temperature model which is stored in a memory (11), and assigns the said current temperature a friction coefficient from a friction coefficient characteristic diagram which is assigned to a lining of the friction clutch (4), which friction coefficient corresponds in each case to a maximum engine torque, the microprocessor (12) comparing the maximum engine torque which is assigned to the friction coefficient with the current engine torque of the internal combustion engine (2) and, if the maximum engine torque which is assigned to the friction coefficient is exceeded by the current engine torque, limiting the current engine torque to the maximum engine torque which is assigned to the friction coefficient.

4. Apparatus according to Claim 3, **characterized in that** the maximum available engine torque of the internal combustion engine (2) is lowered at low temperatures of the friction clutch (4).

## Revendications

1. Procédé de commande d'une chaîne cinématique d'un véhicule automobile comprenant un moteur à combustion interne (2) entraînant un vilebrequin (3) avec un couple moteur prescrit, le vilebrequin (3) étant relié à un arbre d'entrée de transmission (5) d'une transmission (6) par le biais d'un embrayage à friction (4) pour entraîner la chaîne cinématique (1), le couple moteur du moteur à combustion interne (2) variant lorsqu'une température de l'embrayage à friction (4) varie, **caractérisé en ce que** la température actuelle de l'embrayage à friction (4) est déterminée à partir d'un modèle de température, auquel est associé un coefficient de friction à partir d'un diagramme caractéristique de coefficient de friction associé à une garniture de l'embrayage à friction (4), le coefficient de friction correspondant à chaque fois à un couple moteur maximal, le couple moteur maximal associé au coefficient de friction étant comparé au couple moteur actuel du moteur à combustion interne (2) et le couple moteur actuel étant limité au couple moteur maximal associé au coefficient de friction lorsque le couple moteur maximal associé au coefficient de friction est dépassé par le couple moteur actuel.

2. Procédé selon la revendication 1, **caractérisé en ce que** le couple moteur maximal récupérable du moteur à combustion interne (2) est abaissé lorsque l'embrayage à friction (4) est à des températures basses.

3. Dispositif de commande d'une chaîne cinématique d'un véhicule automobile, lequel dispositif de commande comporte une transmission (6) reliée à des roues d'entraînement (8, 9) du véhicule automobile et un arbre d'entrée de transmission (5) est relié à un vilebrequin (3) d'un moteur à combustion interne (2) par le biais d'un embrayage à friction (4) pour entraîner la chaîne cinématique (1), des moyens (10, 11, 12) étant prévus qui modifient le couple moteur du moteur à combustion interne (2) lorsqu'une température de l'embrayage à friction (4) varie, les moyens (10, 11, 12) comprenant un microprocesseur (12), **caractérisé en ce que** le microprocesseur (12) détermine une température actuelle de l'embrayage à friction (4) à partir d'un modèle de température mémorisé dans une mémoire (11) et associe à celui-ci, à partir d'un diagramme caractéristique de coefficient de friction associé à une garniture de l'embrayage à friction (4), un coefficient de friction qui correspond à chaque fois à un couple moteur maximal, le microprocesseur (12) comparant le couple moteur maximal, associé au coefficient de friction, au couple moteur actuel du moteur à combustion interne (2) et limitant le couple moteur actuel au couple moteur maximal associé au coefficient de friction, lorsque le couple moteur maximal associé au coefficient de friction est dépassé par le couple moteur actuel.

4. Dispositif selon la revendication 3, **caractérisé en ce que** le couple moteur maximal récupérable du moteur à combustion interne (2) s'abaisse lorsque l'embrayage à friction (4) est à des températures basses.
